# EUROPEAN PATENT SPECIFICATION

(11) **EP 1 277 190 B1**
(45) Date of publication and mention of the grant of the patent: **26.07.2006**
(21) Application number: 01925019.0
(22) Date of filing: 13.04.2001
(51) Int. Cl.: G09F 3/10, B65D 27/34, G11B 33/04

(54) **ENVELOPE AND ENVELOPE ASSEMBLY**
BRIEFUMSCHLAG UND BRIEFUMSCHLAGANORDNUNG
ENVELOPPE ET ENSEMBLE ENVELOPPE

(30) Priority: 14.04.2000 US 550536; 14.04.2000 US 550345; 14.04.2000 US 550346; 14.04.2000 US 549628; 14.04.2000 US 549020; 14.04.2000 US 549018; 14.04.2000 US 549357; 14.04.2000 US 549658; 14.04.2000 US 550344; 14.04.2000 US 549849; 14.04.2000 US 549402; 14.04.2000 US 549405; 14.04.2000 US 549433
(43) Date of publication of application: 22.01.2003
(73) Proprietor: Flynn, Timothy, J., Key Largo, FL 33037 (US); Flynn, Thomas E., Cristal Lake, IL 60014 (US); Flynn, Patrick, J., Redlands, CA 92373 (US); Kritz, Kenneth, A., Crystal Lake, IL 60014 (US)
(72) Inventor: Flynn, Timothy, J., Key Largo, FL 33037 (US); Flynn, Thomas E., Cristal Lake, IL 60014 (US); Flynn, Patrick, J., Redlands, CA 92373 (US); Kritz, Kenneth, A., Crystal Lake, IL 60014 (US)
(74) Representative: Fleck, Hermann-Joseph
(86) International application number: PCT/US2001/012180
(87) International publication number: WO 2001/079068

(56) References cited:
- EP-A- 0 693 442
- US-A- 4 334 618
- US-A- 5 101 973
- US-A- 5 348 216
- US-A- 5 770 289

## Description

This invention is directed to a sheet of material, to an envelope assembly comprising this sheet of material, and to an envelope. The envelope assembly, or the envelope, can be fed through a printer, such as a laser printer, an ink jet printer, an impact printer, a thermal transfer printer, a direct thermal printer, a typewriter, or any other suitable graphic printing device.

US-A 5 348 216 discloses a printable laminated diskette envelope form which has two paper sheets secured by adhesive. Multiple structures are defined by patterns imperforated in the form and include a diskette envelope of novel tapered shape for easy insertion of a diskette and better wear as well as several labels such as a diskette identifier, a customer order label and the like. A pattern for the diskette envelope includes a print area for a directory listing of files stored on the diskette.

US-A-5 770 289 discloses a die cut self adhesive label sheet, comprising at least three circular CD-ROM labels arranged on a letter or sheet. A plurality of additional labels may be formed in the interstices.

US-A-5 770 289 discloses a die cut self adhesive label sheet, comprising at least three circular CD-ROM labels arranged on a letter or sheet. A plurality of additional labels may be formed in the interstices.

In US-A-334 618 a stationery is shown having a snap-open envelope. In accordance with an aspect of this document the stationery includes an envelope front panel and an envelope back panel which are perforated and adhesively connected back together to provide a snap-open envelope having a reusable portion with an end flap, the panels having facing margins adhesively connected together.

In EP-A-0 693 442 a disk case is shown having a pocket-shaped case body for accommodating a disk. Tongue pieces are provided at one edge of the case body being formed so that one end of each is aligned with a corresponding end of the other at a first position of the end of the disk insertion inlet. The respective other ends of the tongue pieces coincide with a pair of opposite edges of the case body. Perforations are provided along the boundary between each of the tongue pieces and the case body. The tongue pieces can be torn at these perforations to be separated from the case body.

US-A-5 101 973 discloses a compact disc case including a pocket inside of an envelope for holding a compact disc. A cut-out portion provides easy grasping of the disc to permit removal and insertion into the case. A flap folds over the cut-out portion providing a closable case for holding and storing the disc. The flap has a detachable folded portion which can be used to place a mailing label on, then folded over and about the case and sealed to provide a mailing container. The folding portion can then be detached and the case is used to permanently store the disc.

Envelopes can be used to hold a wide variety of items, including letters, documents, compact discs, DVDs, pictures, baseball cards, and the like. Quite often, it is desirable to have a label for adhering to items within an envelope. In order to label items and store them in envelopes, one must purchase the envelopes and the labels separately. Furthermore, an outside surface of the envelope usually must be labeled to indicate what the contents are inside the envelope.

An envelope having a window is one way to reveal the contents of an envelope, but labels must still be purchased separately in order to label the contents themselves. If the labels and the envelopes are separate items, they cannot be run through a printer simultaneously.

In addition, labels affixed to objects, such as compact discs (CDs), with adhesive can harm the discs if a user attempts to remove the labels. More specifically, damage may be caused by pulling off some of the disc protective coating, metal and dye along with the label. A somewhat contradictory reason to oppose the use of labels with adhesives on CDs is that some adhesives can dry out and become less effective over time, especially in the presence of heat, thus the labels could arguably become unattached while being used in a CD drive. Furthermore, ink printed on a thin label is subject to bleeding through the label and onto the CD, which could easily damage the protective coating on the read/write portion of the CD. However, discs with no labels at all are subject to scratching of the protective coating, metal and dye, which can cause irreversible damage.

A further setback in envelope organization is difficulty in distinguishing one envelope from another. When envelopes are aligned in a row, they typically all look alike. Even when a surface of an envelope is labeled, one must usually sort through a number of envelopes, looking at an entire surface of each one, before finding the sought-after envelope.

Envelope assemblies and other types of labels produced as a continuous web during the manufacturing process can be difficult to produce due to the precision required in separating adjacent assemblies from one another. If a cutting device used to separate adjacent assemblies from one another is even slightly misaligned, a large number of misshapen, nonfunctional assemblies can result from the misalignment.

When assembling an envelope from an envelope assembly, a protective panel is often difficult to separate from a face sheet. Not only does this difficulty lead to frustration, but it can also result in worn edges of the face sheet. Furthermore, once the protective panel is separated from the face sheet, it is often difficult to evenly fold one element of the assembly onto another element of the assembly, thereby resulting in a lopsided, uneven envelope.

Labels, such as envelope assemblies, typically have text, or a design, or some type of printed matter on a face sheet. However, certain face sheet materials, such as films and foils, cannot be printed on due to the "unprintable" surface properties of these materials. A protective panel is typically adhered to the face sheet with an adhesive coating, and disposed of as waste once it is separated from the face sheet. The protective panel typically has a smooth surface which is usually unprintable. Furthermore, when a single label is removed from a sheet of labels, a plain, smooth surface of the protective panel to which the single label was adhered is exposed and often discarded as waste, for one reason because nothing can typically be printed on the smooth surface.

When separating a label from a remainder portion of a label sheet, die-cut lines can be too flimsy, thereby allowing the label to separate from the remainder portion before a user desires such separation. Conversely, micro-perforations can be too durable, thereby creating difficulty for a user who attempts to separate a label from a remainder portion, the process of which often results in a torn label.

Accordingly, a need exists for a new and improved envelope, or envelope assembly, that provides means for labeling the envelope and any contents within the envelope. A need also exists for an envelope that can be more easily identified and organized. A further need exists for an envelope assembly that can be easily manufactured and assembled to form an envelope having a finished appearance.

Furtliermore, a need exists for a way to print on typically unprintable label surfaces. A need also exists for an envelope or envelope assembly having a window without a loss of printable surface area. A further need exists for an improved way to separate labels from remainder portions.

### SUMMARY OF THE INVENTION

The present invention relates to a sheet of material an envelope assembly, or an envelope. The envelope assembly or envelope has a removable panel that can be printed upon simultaneously while printing upon the label or envelope assembly or envelope. The envelope assembly, can further comprise a tab for ease of identification and organization.

The present invention also relates to a sheet of material, an envelope assembly or envelope having a coating that renders coated surface areas printable. More particularly, even extremely smooth surfaces, such as protective panels, can be printed upon when coated with the coating of the present invention.

The present invention also relates to a tearable line that can be used to separate a label or an envelope assembly from a remainder portion, or from an adjacent label or envelope assembly. The tearable line, having both die-cut lines and micro-perforated lines, is durable enough to withstand bends and turns when routed through a printer, yet weak enough to allow easy separation.

The envelope assembly includes a sheet of material having a printable surface on one side and an adhesive covered by a protective panel on another side. The sheet of material comprises an assembly shape preferably having a primary panel adjacent a secondary panel. At least one flap is preferably but not necessarily located along at least one edge of the primary panel and/or the secondary panel.

In one embodiment, the sheet of material is rectangular with perforated, micro-perforated and/or die-cut lines located around at least a portion of a periphery of the assembly shape, thereby separating the assembly shape from a remainder portion of the material.

The protective panel is preferably transparent or translucent, and may also be printable. The adhesive coating at least partially covers one side of a removable panel located on the assembly shape and/or on the remainder portion. Alternatively, instead of adhesive coating, the removable panel can be statically adhered to the protective panel. When the removable panel is removed from a remainder of the envelope or envelope assembly, the transparent or translucent protective panel enables a user to view any contents of the envelope from outside the envelope. Furthermore, when the transparent or translucent protective panel is printable, the envelope or envelope assembly maintains as much printable surface area as an envelope or envelope assembly without a removable panel.

In another embodiment, the primary panel, the secondary panel and/or the remainder portion of the material is preferably perforated, micro-perforated, and/or die-cut to form the removable panel. The removable panel can be in a shape of a compact disc label, for example, so that graphics can be printed upon the printable surface of the primary panel and/or the secondary panel, and the removable panel can then be separated from the primary panel and/or the secondary panel and adhered to a compact disc. Alternatively, the removable panel can be in a shape of a DVD label suited to fit a non-read/write portion of the DVD. Furthermore, multiple nested ring-shaped removable panels can be located on the primary panel and/or the secondary panel, thereby providing multiple ring-shaped labels for multiple purposes.

The adhesive coating also at least partially covers one side of the at least one flap, and/or at least one edge of the primary panel and/or at least one edge of the secondary panel. The protective panel can be removed to expose the adhesive coating. In one preferred embodiment of this invention, the adhesive coating entirely covers one side of the sheet of material. In another preferred embodiment of this invention, the adhesive coating only partially covers the one side of the sheet of material. In yet another preferred embodiment of this invention, the adhesive coating entirely covers one side of the sheet of material, and a second sheet of material is attached to the sheet of material and contains a portion of the assembly shape thereon. In a further embodiment of this invention, a laminate layer is coated with an adhesive coating on both sides and is located between the sheet of material and the protective panel.

The protective panel preferably has at least one tearable line of separation, such that a portion of the protective panel can be separated from a remaining portion, such as a border portion, of the protective panel. In one preferred embodiment, the tearable lines of separation are located along fold lines of the flaps. In another preferred embodiment, the tearable lines of separation are offset from the tearable lines of separation on the sheet of material for ease in separating the protective panel from the sheet of material in the appropriate places.

To form an envelope, the protective panel is first partially or completely separated from the adhesive to expose the adhesive on each flap, edge of the primary panel and/or edge of the secondary panel. The flaps and/or the secondary panel are then folded toward the primary panel such that surfaces with exposed adhesive are aligned to contact surfaces to which they can adhere, thereby forming an envelope.

In one preferred embodiment, at least one tab extends outward from the primary panel and/or the secondary panel. A flap can be die-cut about a portion of a periphery of the tab, such that the tab remains extending outward while the flap can be folded over and adhered to either the primary panel or the secondary panel. The tab can be printed upon directly, or alternatively, the removable panel can be of a size and shape suitable to be adhered to the tab.

The envelope assembly of the present invention can be designed and constructed in a wide range of sizes for a number of different uses. In particular, the envelope assembly is suitable for housing compact discs, mini-discs, baseball cards, photographs, and many other items. Furthermore, the envelope and/or envelope assembly can have one or more holes in the primary panel corresponding with one or more holes in the secondary panel, thereby enabling a user to store the envelope in a ring-binder, such as in a personal planner.

When the envelope assemblies are produced along a continuous web, registration lines can extend between adjacent assemblies, thereby providing for a margin of error in the process of separating adjacent assemblies. Furthermore, fold lines can be created on the envelope assemblies in order to make the assembly process of the envelope more user-friendly. Such fold lines can be created by score lines, perforations and/or micro-perforations and can be located between flaps, panels and any other component intended to be folded.

When the envelope assembly has a circular removable panel situated on either the primary panel or the secondary panel, one of the flaps can have a removable partial circle situated on the flap in such a manner that when the flap is folded, no portion of the flap blocks the view of the circular removable panel. This embodiment is desirable whether or not the flap on which the removable partial circle is located is or is not intended to be used to close the envelope. When the flap is not intended to close and seal the envelope, the flap on which the removable partial circle is located can be tucked inside the envelope, thereby providing reinforcement at the opening of the envelope and, if the protective panel is transparent and/or translucent, the flap will not impede the view of the contents of the envelope. When the flap is intended to close and seal the envelope, if the protective panel is transparent and/or translucent, once again, the flap will not impede the view of the contents of the envelope.

It is therefore an object of the present invention to provide an envelope, or an envelope assembly, that has at least one, or multiple, nested, ring-shaped removable panels suitable to be adhered to a compact disc (CD) or digital video disc (DVD).

It is a further object of the present invention to provide an envelope, or an envelope assembly, with a removable panel suitable in size and shape to be adhered to an index tab.

It is another object of the present invention to provide an envelope assembly having offset tearable lines for ease of removal of the protective panel from the sheet of material.

It is yet another object of the present invention to provide an envelope assembly having a partially circular removable panel on one of the flaps.

It is also another object of the present invention to provide an envelope assembly having registration lines extending between adjacent assemblies for improved results during the manufacturing process.

It is still another object of the present invention to provide an envelope assembly having fold lines along edges of portions intended to be folded in order to create an envelope.

It is likewise another object of the present invention to provide an envelope assembly that can be manufactured quickly and inexpensively using a first sheet of material covered on one side by an adhesive with a protective panel covering the adhesive, and a second sheet of material attached to the first sheet of material.

It is moreover another object of the present invention to provide an envelope and/or an envelope assembly having ring binder holes for convenient storage.

It is yet another object of the present invention to provide an envelope and/or envelope assembly having a removable panel label suitable for labeling CDs and DVDs that does not adversely affect CDs and DVDs.

It is still another object of the present invention to provide a tearable line for a label and/or envelope assembly that has sufficient structural strength, for example for routing through a printer, yet is configured for easy separation that forms a clean edge.

It is finally another object of the present invention to provide an envelope assembly having a printable protective panel. In this embodiment, the protective panel is also preferably transparent and/or translucent such that the contents of the envelope can still be seen through the protective panel once a removable panel is removed.

The foregoing and other features and advantages of the present invention will become further apparent from the following detailed description of the presently preferred embodiments, read in conjunction with the accompanying drawings. The detailed description and drawings are intended to illustrate the present invention rather than limit the scope of the present invention as defined by the appended claims and equivalents of the appended claims.

### BRIEF DESCRIPTION OF THE DRAWINGS

The present invention can be better understood with reference to the following drawings. In the drawings, like reference numerals designate corresponding parts throughout the several views. Moreover, it should be noted that the drawings are not necessarily to scale, emphasis instead being placed upon clearly illustrating principles of the present invention.
Fig. 1 illustrates a front plan view of a first preferred embodiment of an envelope assembly in sheet form and an unfolded position, showing three areas, each where a protective panel is removed, thereby exposing a layer of adhesive coating;
Fig. 2 illustrates a front plan view of the envelope assembly shown in Fig. 1, but in a folded position with a compact disc inserted within a pocket formed by the folded envelope assembly;
Fig. 3 illustrates a rear plan view of the envelope assembly shown in Figs. 1 and 2, in a folded position;
Fig. 4 illustrates a front plan view of a second preferred embodiment of the envelope assembly in a folded position;
Fig. 5 illustrates a front plan view of a third preferred embodiment of the envelope assembly, having only two flaps, in a folded position;
Fig. 6 illustrates a front plan view of a fourth preferred embodiment of the envelope assembly, in a folded position, having only two flaps, and having an adhesive coating only on a secondary panel;
Fig. 7 illustrates a rear plan view of a fifth preferred embodiment of the envelope assembly in an unfolded position, having flaps but no tabs, and showing a ring-shaped removable panel of a face material coated with an adhesive such that the removable panel can be separated from the assembly and adhered to a compact disc;
Fig. 8 illustrates a rear plan view of a sixth preferred embodiment of the envelope assembly in an unfolded position, showing a ring-shaped removable panel of a face material coated with an adhesive such that the removable panel can be separated from the assembly and, for example, adhered to a compact disc;
Fig. 9 illustrates a rear plan view of a seventh preferred embodiment of the envelope assembly in an unfolded position in an assembly shape having a removable panel;
Fig. 10 illustrates a rear plan view of an eighth preferred embodiment of the envelope assembly in an unfolded position having removable panels in a remainder portion such that the removable panels can be used to form tabs;
Fig. 11 illustrates a cross-section view, taken along line 11-11 as shown in Fig. 1, of the unfolded envelope assembly;
Fig. 12 illustrates a rear plan view of a ninth preferred embodiment of the envelope assembly in an unfolded position having offset tearable lines in the protective panel, nested ring-shaped removable panels in the face material, a removable partial circle on one of the flaps, and registration lines extending from the primary panel and the secondary panel;
Fig. 13 illustrates a cross-section view, taken along line 13-13 as shown in Fig. 12, of the unfolded envelope assembly;
Fig. 14 illustrates a cross-section view of an alternative embodiment of the unfolded envelope assembly;
Fig. 15 illustrates a cross-section view of yet another alternative embodiment of the unfolded envelope assembly; and
Fig. 16 illustrates a partial, enlarged view of a tearable line defining an envelope assembly.

### DETAILED DESCRIPTION OF PREFERRED EMBODIMENTS

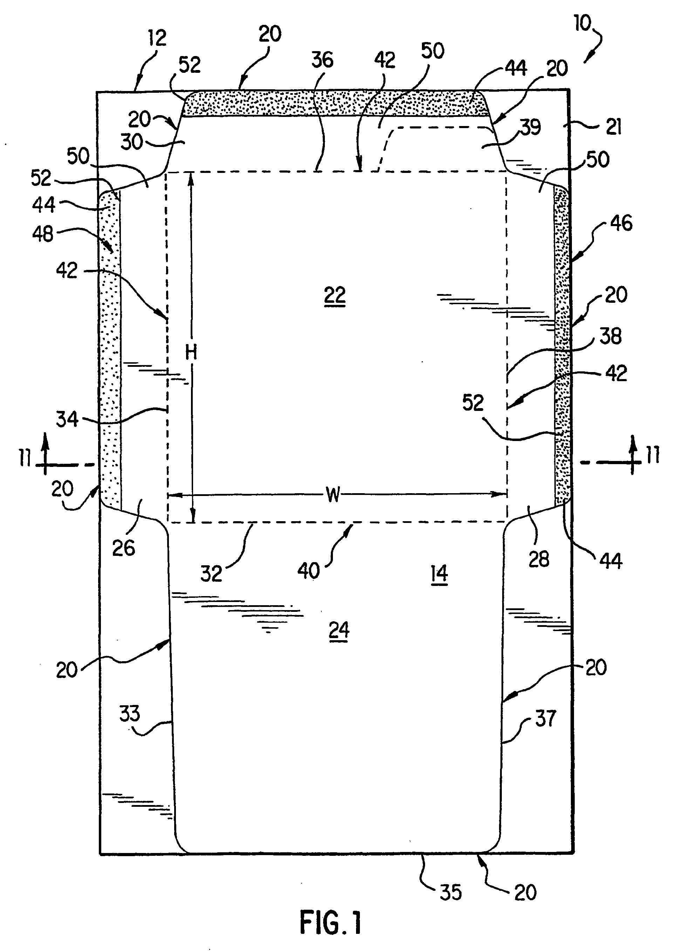

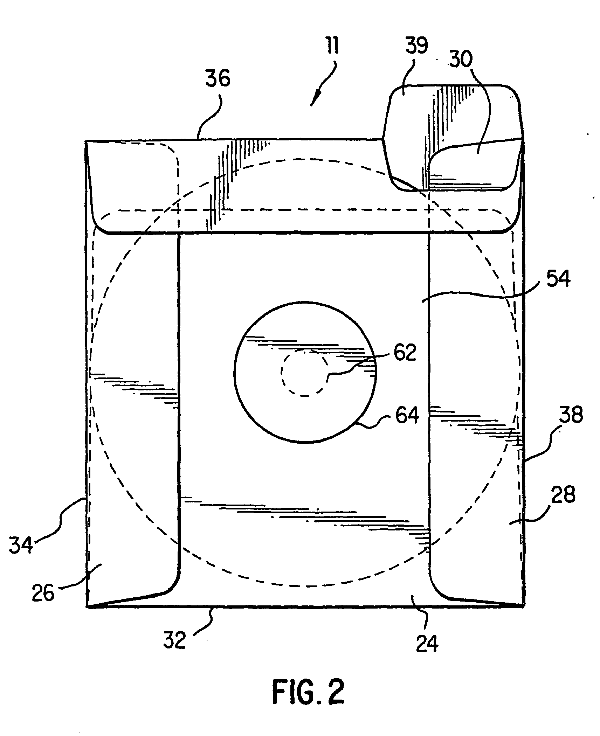

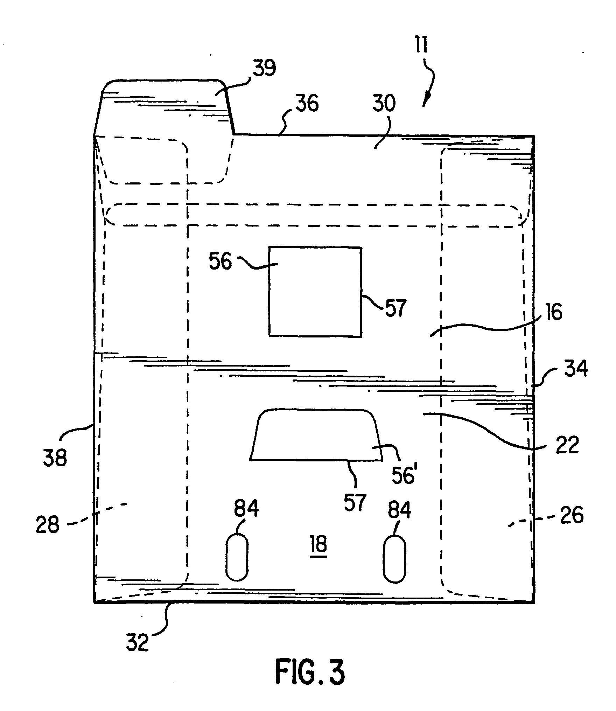

Figs. 1, 2 and 3 illustrate a first preferred embodiment of an envelope assembly 10 in accordance with the present invention. As generally shown in Fig. 1, an envelope assembly 10 comprises a sheet 12 of material that can be fed into and run through a printer. An assembly shape 20, which may also be referred to as a tearable shape, can then be separated from a remaining portion 21 of the sheet 12 and folded into an envelope 11 for holding, for example, a compact disc 54 (CD), as shown in Fig. 2. A removable panel 56 and 56', as shown in Fig. 3, can be separated from the sheet 12 as a label and adhered to a separate surface. Regardless of whether the envelope 11 comprises the removable panel 56, the envelope 11 can comprise a tab 39 for organizational purposes.

Referring still generally to Fig. 1, the sheet 12 is of any suitable shape, and generally any suitable size that can be accepted by and fed through a printer, such as a laser printer or an ink jet printer. Common sizes of paper generally fed through printers are 8.5 inches by 5.5 inches, 8.5 inches by 11 inches, 8.263 inches by 11.688 inches (A4 size), and 8.5 inches by 14 inches. The sheet 12 is preferably but not necessarily constructed of any suitable paper, paper composite, non-metal and/or metal material that can be used as a label. Other suitable materials for constructing the sheet 12 include fabric, plastic, and metal foils. An adhesive coating 44 covered by a protective panel 50 is applied, in any suitable manner known to those skilled in the art, to a first side 14 of the sheet 12. The sheet 12 preferably has a printable surface 16 on a second side 18, as shown in Fig. 3. The printable surface 16 can be any of a variety of face materials used to make pressure sensitive, or self-adhesive labels. Such face materials may include, but are not limited to: smudgeproof stock, litho stock, cast coated stock, tag stock, fluorescent stock, foils, computer printable polyester, vinyl, satin cloth, Tyvek^{™} material, flexible plastic, book papers, photo quality papers and/or photo quality film. Furthermore, various portions of the face materials can be different colors, thereby resulting in different colored parts, such as the removable panel 56 and/or the tab 39.

As used throughout this specification and in the claims, the term *printable surface* relates to a surface of any type of matter upon which a person or machine can draw, print, color, paint, photocopy, write, emboss, or make any other type of mark or graphic. Laser printers, ink jet printers, impact printers, thermal transfer printers, direct thermal printers, typewriters, or any other suitable graphic printing devices are preferred but not necessary for use with printable surfaces according to this invention.

Still referring generally to Fig. 1, within the sheet 12 is an assembly shape 20 comprising a primary panel 22, a secondary panel 24 and at least one, preferably two, more preferably three flaps 26, 28 and 30. As used throughout this specification and in the claims, the phrase *assembly shape,* or the phrase *tearable shape,* is intended to relate to a shape, such as the shape identified in Fig. 1 by element reference numerals 20, that can be torn away from a remaining portion 21 of the sheet 12, by using tearable lines, such as die-cut lines, perforated lines, micro-perforated lines, or any combination of these types of separation, or any other suitable structure that enables separation.

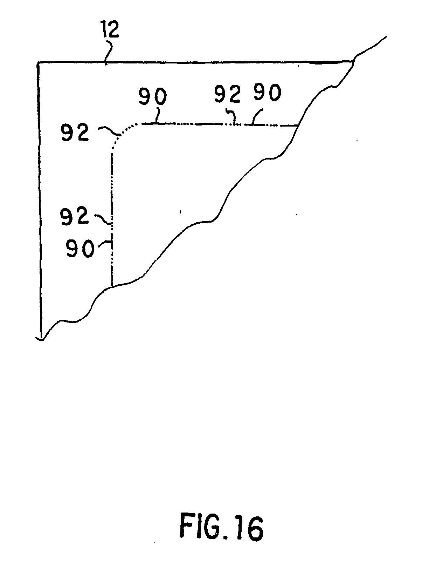

A preferred type of tearable line 88 is a line that includes repeating sections of a die-cut line 90 connected to a micro-perforated line 92, as shown in Fig. 16. This type of tearable line 88 has enough strength in the micro-perforated line 92 section to maintain the structural integrity or cohesiveness of the sheet 12 as the sheet 12 passes through a printer, yet has enough weakness in the die-cut line 90 section to enable easy and clean separation of the assembly shape 20 from the remaining portion 21 of the sheet 20 when such separation is desired. The lengths of the die-cut lines 90 and the micro-perforated lines 92 may vary depending on intended use, but a preferred length of the die-cut lines 90 is in a range of between about 0.5 cm and about 4.0 cm, more preferably between about 0.75 cm and about 2.0 cm. A preferred length of the micro-perforated lines 92 is in a range of between about 0.1 cm and about 2.0 cm, more preferably between about 0.3 cm and about 1.0 cm. The term "micro-perforation" refers to a line of perforations having approximately 20 or more cuts per centimeter, or approximately 50 or more cuts per inch. Relatively longer micro-perforation lines 92, preferably longer than about 0.75 cm, and/or relatively shorter die-cut lines 90, preferably shorter than about 1.5 cm, are suitable for defining label or envelope assembly shapes with curves and/or angles, thereby providing greater durability and maintaining structural integrity of the sheet 12 until a user separates the sheet 12 along the tearable line 88. Likewise, relatively shorter micro-perforation lines 92, preferably shorter than about 0.75 cm, and/or relatively longer die-cut lines 90, preferably longer than about 1.5 cm, are suitable for defining label or envelope assembly shapes with straight edges, thereby providing clean-cut edges and easy separation. In particular, micro-perforation lines 92 are suitable for defining corners, as shown in Fig. 16, whereas die-cut lines 90 typically do not provide enough structure to maintain corners intact during certain processes, for example when the sheet 12 is routed through a printer.

The assembly shape 20 can be die-cut and micro-perforated along at least a portion of a periphery, defined by the tearable line 88 described above, such that the assembly shape 20 can be easily removed or separated from the remaining portion 21 of the sheet 12, for example after the sheet 12 is run through a printer.

In one preferred embodiment, the primary panel 22 can be square or rectangular, thereby having four edges 32, 34, 36 and 38. In one preferred embodiment, the primary panel 22 has a width (W) in a range between about 4.75 inches and about 5.25 inches, and a height (H) in a range between about 4.75 inches and about 5.25 inches. In other embodiments, the primary panel 22 can have any suitable circular, polygonal or non-polygonal shape. The secondary panel 24 is located along the edge 32 of the primary panel 22. A primary fold line 40, which may or may not be marked, or formed, with score lines, perforations and/or micro-perforations, is located at the edge 32 where the primary panel 22 and the secondary panel 24 meet. Instead of marking, or forming, the primary fold line 40 with the types of incisions or perforations mentioned in this specification, the primary fold line 40 can alternatively be marked, or formed, with grooves, impressions, or any other type of modification of the assembly 10 that facilitates easy folding. Each of the flaps 26, 28 and 30 are located at separate edges 34, 36 and 38 of the primary panel 22. Alternatively, at least one of the flaps 26, 28 and 30 can be located at a corresponding edge 33, 35 or 37 of the secondary panel 24. Secondary fold lines 42, possibly marked with score lines, perforations and/or micro-perforations, are located at the edges 34, 36 and 38 of the primary panel 22 where each of the flaps 26, 28 and 30 and the primary panel 22 meet, and possibly at a junction between the secondary panel 24 and any of the flaps 26, 28 and 30.

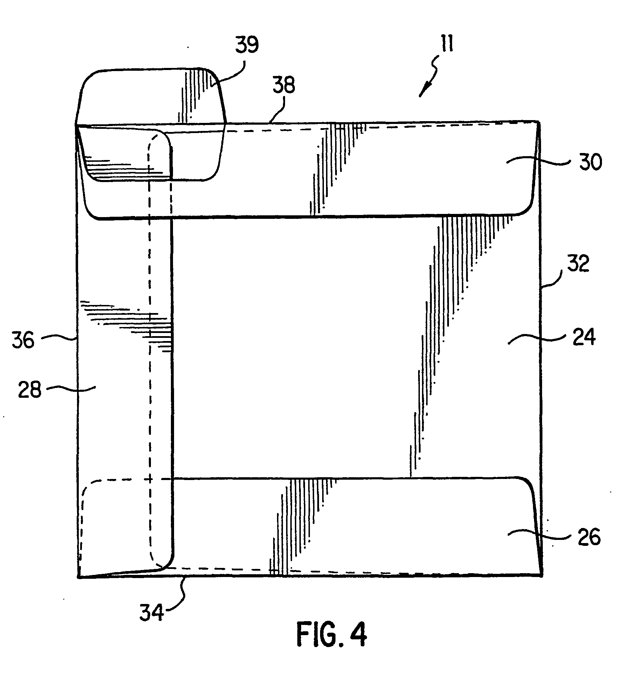

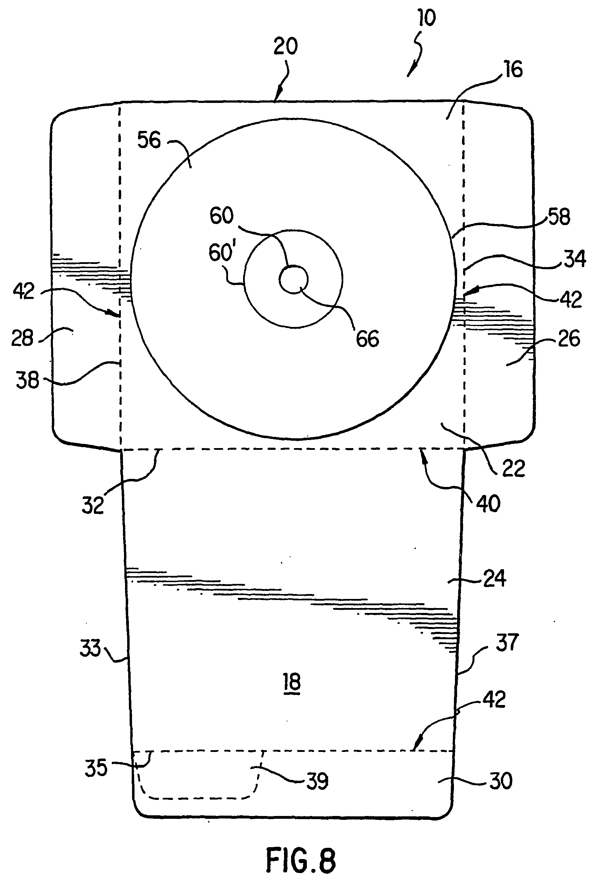

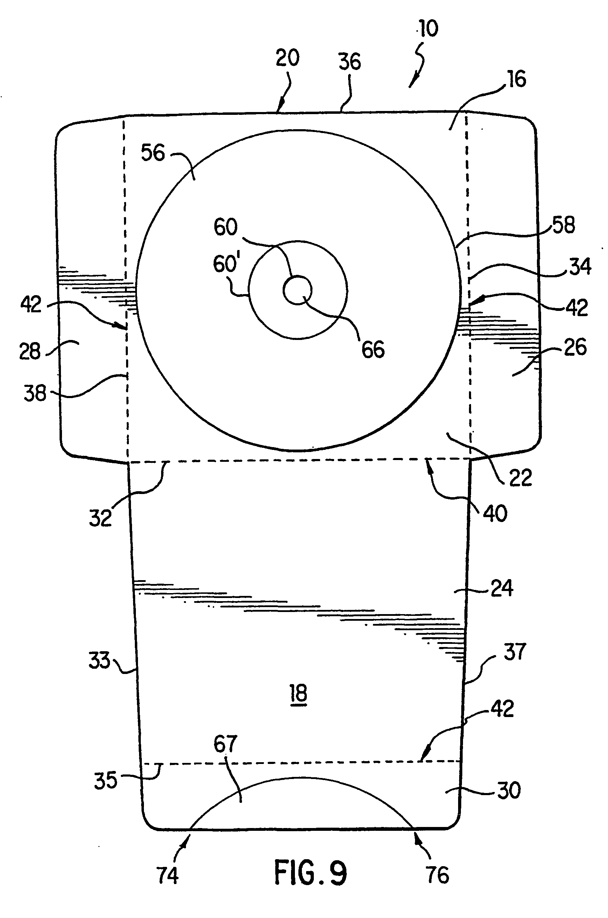

In one preferred embodiment, the envelope assembly 10 comprises three flaps 26, 28 and 30, one located along each edge 34, 36 and 38 of the primary panel 22 not occupied by the secondary panel 24, as shown in Figs. 1-4, 7 and 10. Flap 30 can be partially coated with a suitable adhesive to form an adhesive coating 44 for securely sealing the envelope assembly 10. Alternatively, no adhesive coating 44 is applied to the flap 30, or the flap 30 comprises a resealable type of closure, as known by those skilled in the art, such that the envelope assembly 10 can be sealed and opened multiple times without tearing or otherwise distorting the sheet 12. In a further alternative embodiment, illustrated in Figs. 8 and 9, the flap 30 is located along one of the edges 33, 35 and 37 of the secondary panel 24. When flaps 26 and 28 are located on opposite edges 34 and 38 of the primary panel 22 and the edge 36 remains flapless, the assembly shape 20 without any remaining portion 21 of the material can easily be fed through a printer, with the edge 36 being fed first.

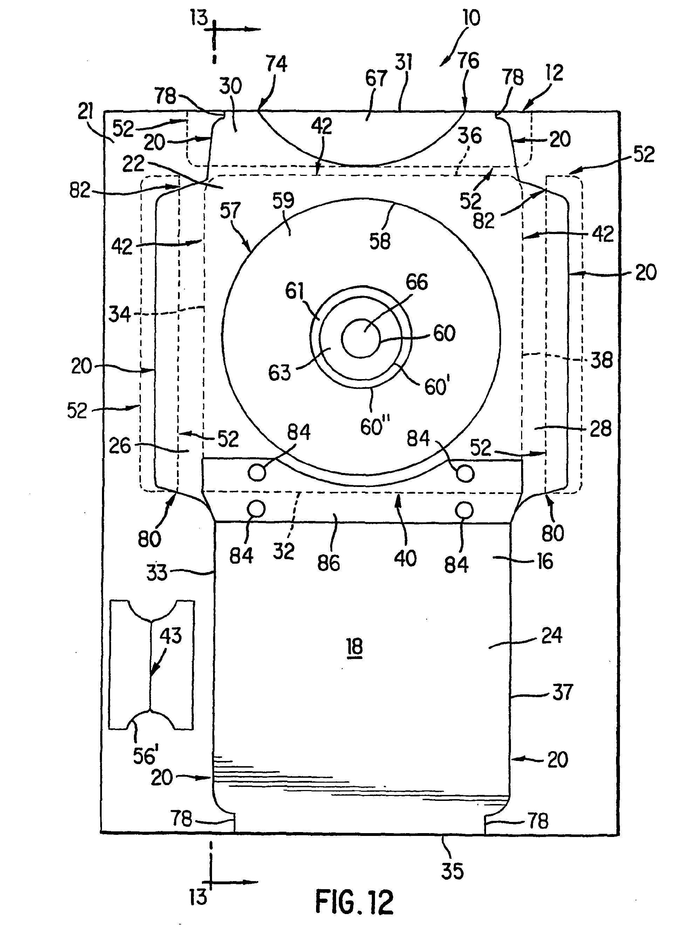

When manufacturing the envelope assembly 10, the sheet 12 of material can originate from a long, continuous web of material later to be cut into separate sheets 12 each having an envelope assembly 10. For example, the envelope assembly 10 in Fig. 12 can be separated from adjacent envelope assemblies 10 connected to the flap 30 and the secondary panel 24. In order to provide a clean cut between adjacent envelope assemblies 10, taking into account manufacturing registration needs or a margin of error in spacing the cut, registration lines 78 extend between adjacent envelope assemblies 10. The registration lines 78 are preferably but not necessarily substantially perpendicular to the resulting edge 35 of the secondary panel 24, of an upline envelope assembly 10, and the resulting edge 31 of flap 30, of a downline envelope assembly 10. Both edges 35 and 31 are co-extensive with edges of the resulting sheet 12. At the points from which the registration lines 78 extend from the assembly 10, the registration lines 78 can either meet at or near the side edges of the flap 30 and the secondary panel 24 at angles, such as right angles, or the registration lines 78 can be co-extensive with the side edges of the flap 30 and the secondary panel 24.

As shown in Figs. 1-4 and 8, the tab 39 can be formed within or integrated as part of the flap 30. More specifically, the flap 30 is die-cut about a portion of a periphery of the tab 39. The tab 39 can then be separated from the flap 30 along the periphery of the tab 39, such that when the flap 30 is folded over, the tab 39 remains extended outward from the primary panel 22 and generally within a same plane as the primary panel 22. Any number of the tabs 39 can be formed within any of the flaps 26, 28 and 30, and/or within the primary panel 22 and/or the secondary panel 24.

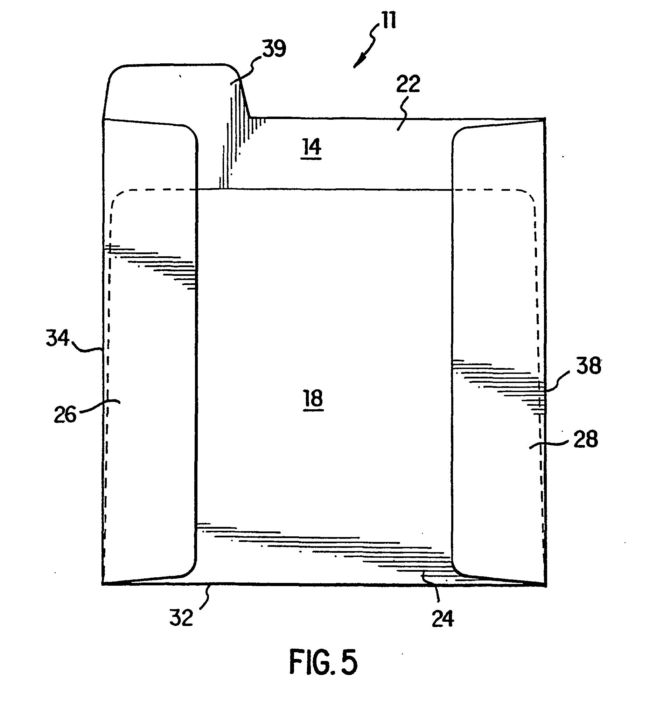

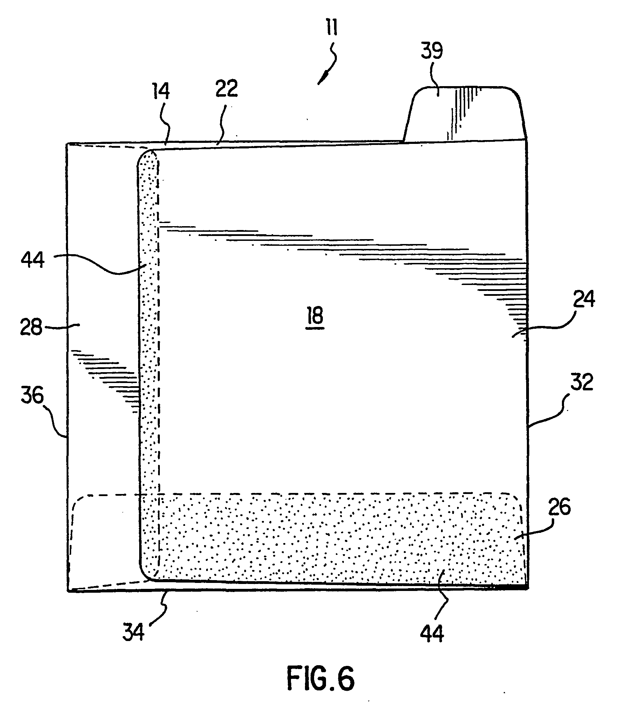

In other embodiments having only two flaps 26 and 28, the flaps 26 and 28 can be located either on the two opposing edges 34 and 38 adjacent the edge 32 on which the secondary panel 24 is located, as shown in Fig. 5, or on the edge 36 opposite the secondary panel 24 and on the edge 34 adjacent the edge 32 on which the secondary panel 24 is located, as shown in Fig. 6. In a further embodiment, one flap 26 can be located on one of the edges 34, 36 and 38 of the primary panel 22 and the other flap 28 can be located on one of the edges 33, 35 and 37 of the secondary panel 24. It is apparent that any number of flaps can be located at any position which is suitable for adhering one or more of the flaps 26, 28 and/or 30 to the primary panel 22 and/or the secondary panel 24.

In an embodiment of the present invention having only two flaps 26 and 28, the tab 39 is formed within a periphery or integrated as a part of the assembly shape 20, such as shown in Figs. 5 and 6. The tab 39 extends outward from the edge 36 of the primary panel 22 not occupied by either of the flaps 26 and 28. In other preferred embodiments of the present invention, more than one tab 39 can extend outward from the edge 36 of the primary panel 22. As in an embodiment having three flaps 26, 28 and 30, any additional tabs 39 can also be formed within or integrated as part of the flaps 26 and 28, and/or within the primary panel 22 and/or within the secondary panel 24. In a preferred embodiment, the tabs 39 are staggered cut in any suitable group number. For example, a first envelope can have a first tab 39 on a left portion adjacent the edge 36 of the primary panel 22, a second envelope can have a tab 39 on a middle portion of the edge 36 of the primary panel 22, and a third envelope can have a tab 39 on a right portion adjacent the edge 36 of the primary panel 22.

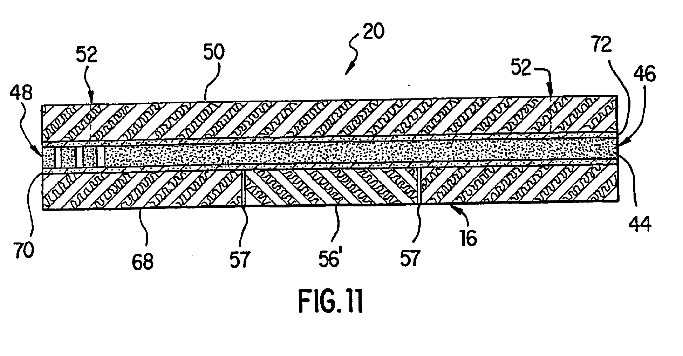

The adhesive coating 44 preferably adheres significantly more to the sheet 12 than to the protective panel 50, such that the protective panel 50 can be removed to expose the adhesive coating 44 which preferably remains on the sheet 12. In such a preferred embodiment, the adhesive coating 44 at least partially covers the first side 14 of each of the flaps 26, 28 and 30. The adhesive coating 44 can be applied in either a continuous format 46, as shown on flap 28 in Figs. 1 and 11, or a patterned format 48, as shown on flap 26 in Figs. 1 and 11. The adhesive coating 44 can cover the entire first side 14 of the assembly shape 20, in which case, to prevent undesired adhesion, a protective panel 50 preferably also covers the entire area covered by the adhesive coating 44.

The protective panel 50 preferably has at least one tearable line of separation 52, either die-cut or perforated with, for example, perforations and/or micro-perforations, or a combination of die-cut lines and micro-perforated lines as described above, located either along at least one of the edges 32, 34, 36 and 38 of the primary panel 22 or offset on at least one of the flaps 26, 28 and 30 a set distance from the primary panel 22. As shown in Fig. 1, the tearable line of separation 52 is located between an outer edge of the flap 26, 28 or 30 and the fold line 42 but it is apparent that the tearable line of separation 52 can coincide with the fold line 42. As shown by the dotted lines in Fig. 12, the tearable lines of separation 52 can be offset inside and/or outside of the assembly shape 20, thereby intersecting the perimeter of the assembly shape 20 at points 80 and 82, such that when the assembly shape 20 is removed or separated from the sheet 12, the protective panel 50 remains on the adhesive coating 44 and then can be easily removed from the adhesive coating 44 when desired. Thus, when the protective panel 50 is separated at the tearable line of separation 52, an area of adhesive coating 44 under the separated portion of the protective panel 50 is exposed.

Referring to Figs. 1-10 and 12, to form the envelope assembly 10 into the envelope 11, at least one of the flaps 26, 28 and 30 and/or the secondary panel 24 without exposed adhesive coating 44 is folded over to face the first side 14 of the primary panel 22. The protective panel 50 is separated from the adhesive coating 44 and torn from any remaining portion of the protective panel 50, such as at the tearable lines of separation 52. The flaps 26, 28 and 30 and/or the secondary panel 24 with exposed adhesive coating 44 are preferably then folded over the first folded flaps 26, 28 and 30 and/or secondary panel 24, to construct the envelope 11. The folded flaps 26, 28 and 30 and/or secondary panel 24 are secured by contacting the exposed adhesive coating 44 with surface portions of the flaps 26, 28 and 30 and/or the secondary panel 24 without exposed adhesive coating 44.

In an alternative embodiment, the adhesive coating 44 can at least partially cover the first side 14 of the secondary panel 24, without covering any of the flaps 26 and 28, as shown in Fig. 6. In this embodiment, the flaps 26 and 28 are first folded inward, and the secondary panel 24 is subsequently folded over to face the flaps 26 and 28. Preferably then, the flaps 26 and 28 and the secondary panel 24 are secured in place with the adhesive coating 44.

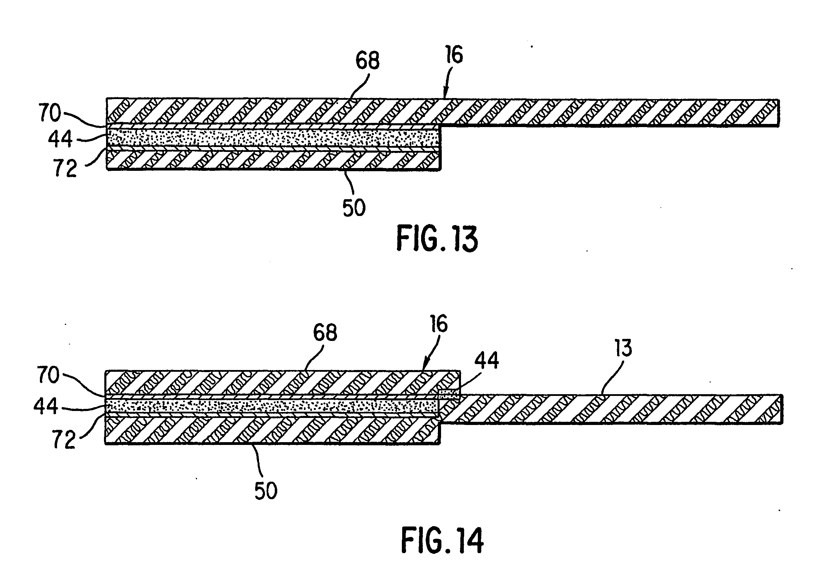

In another embodiment, shown in cross-section in Fig. 13, the adhesive coating 44 covers only approximately one-half of the sheet 12. This embodiment can be easily, and efficiently, manufactured due to the fact that the adhesive coating 44 and the protective panel 50 are applied to the sheet 12 in one area, rather than across the entire sheet 12 or in specific locations. Furthermore, this embodiment is cost-efficient in that only about one-half of the amount of protective panel 50 material and about one-half of the amount of adhesive coating 44 are required to manufacture this embodiment, compared to the embodiment in which an entire surface of the sheet 12 is coated and covered with the adhesive coating 44 and the protective panel 50.

In still another embodiment, shown in cross-section in Fig. 14, a second sheet of material 13 is attached to the sheet 12. The second sheet 13 and the sheet 12 are about equal in size and together form a single sheet of any suitable shape and/or size, preferably a shape and/or size that can be accepted by and fed through a printer. In this embodiment, an entire surface of the sheet 12 is coated and covered with the adhesive coating 44 and the protective panel 50, but the amount of adhesive coating 44 and protective panel 50 material used is also equal to about one-half of the amount of protective panel 50 material and roughly half the amount of adhesive coating 44 required to manufacture the embodiment in which an entire surface of a full-size sheet 12 is coated and covered with the adhesive coating 44 and the protective panel 50.

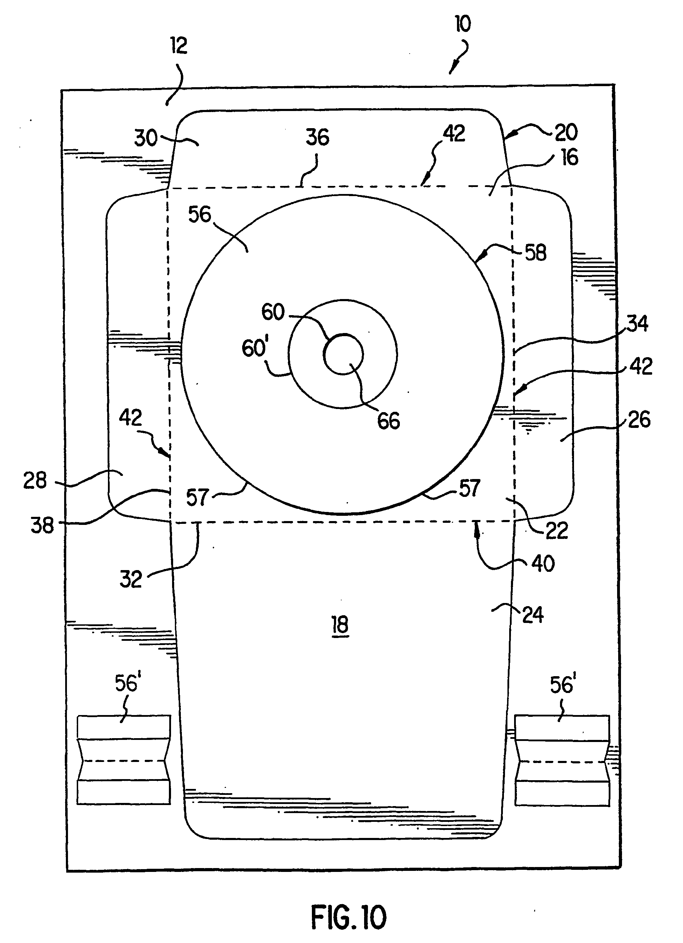

In yet another embodiment, illustrated in Figs 3, 7, 8-10 and 12, the primary panel 22 and/or the secondary panel 24 comprises at least one removable panel 56 and/or 56', preferably with at least a portion of each removable panel 56 having the printable surface 16. The removable panel 56 can be a part of the printable surface 16 of the remaining portion 21 of the sheet 12. For example, as shown in Figs. 10 and 12, the removable panel 56' can be a symmetrical shape that can be folded about a fold line 43 and adhered to an edge 32, 34, 36 or 38 of the primary panel 22, or an edge 33, 35 or 37 of the secondary panel 24. Removable panel 56' can be folded about an axis at fold line 43 and, for example, attached to an edge portion of envelope assembly 10 so that a portion of the removable panel 56' protrudes from the finished envelope 11 as an index tab label. The shape of the removable panel 56' when used as a free-standing index tab label is such that the removable panel 56' is symmetrical about the fold line 43 and shorter at the fold line 43 than at each of the edges which are parallel to the fold line 43. A removable panel 56' having such a shape provides a functional free-standing index tab that is less likely to get caught on or otherwise interfere with loose objects, as compared to an index tab wherein the fold line 43 is the same length as, or longer than, a base portion of the index tab.

In another embodiment, the removable panel 56' has a similar shape and a surface area less than or equal to a shape and a surface area of the tab 39, such that the removable panel 56' can be adhered to and completely or almost completely cover the tab 39. As shown in Fig. 3, for example, the removable panel 56' can have a shape and size similar to one side of the tab 39.

In one preferred embodiment of the invention, the primary panel 22, the secondary panel 24, and/or the remaining portion 21 of the sheet 12 is kiss-cut about at least a portion of a periphery of the removable panel 56 such that the removable panel 56 can be separated from the envelope 11 or the envelope assembly 10 while leaving intact the envelope 11 or the envelope assembly 10. The term "kiss-cut" refers to a separation by a knife cut through a face material layer 68, such as shown in Figs. 11 and 13-15, without removing a matrix between the remaining layers.

Preferably the adhesive coating 44 covers one side of the removable panel 56. The removable panel 56 can be printed upon when the sheet 12 is run through a printer. After the removable panel 56 is printed upon, the removable panel 56 can be used as a label, or a sticker, to adhere to any suitable surface.

In an alternative embodiment, with no adhesive coating 44, the removable panel 56 can be constructed of a material which can be statically adhered to the protective panel 50. Once the removable panel 56 is removed from the protective panel 50, the removable panel 56 can be statically adhered to another surface, such as on a compact disc (CD) or a digital video disc (DVD). Suitable compositions for the sheet of material 12, or at least a portion of the sheet of material 12, where the non-adhesive, statically-adhering removable panel 56 is located, include vinyl polymers, such as Classics *Plus*® SELECT^{™} 81110SL Topcoated 8.0 Mil White Cling Vinyl, or any other suitable polymer. The non-adhesive, statically-adhering removable panel 56 preferably but not necessarily has a printable surface.

In one preferred embodiment of the present invention, the protective panel 50 at least covers an entire area of the first side 14 of the sheet 12 corresponding to the removable panel 56 on the second side 18 of the sheet 12. The protective panel 50 can be at least partially transparent or translucent, constructed of, for example, glassine or clear plastic, such that any contents of the envelope 11 can be viewed from outside the envelope 11 with the removable panel 56 removed. Yet a further embodiment of this invention includes a printable protective panel 50. With a printable surface, the protective panel 50 can be printed upon, particularly in the area covering the removable panel 56, such that when the removable panel 56 is removed from the protective panel 50, the text or graphics printed on the protective panel 50 are visible from outside the envelope 11.

Materials suitable for making a printable protective panel 50 include a substrate, such as paper, metal, film, foil, and combinations thereof. Other materials having smooth surfaces, with relatively low porosity, such as photo resin papers and polymers, including polypropylene, polyester, polyethylene, and vinyl, are also suitable substrates. These substrates can be coated with a superabsorbent coating comprising a gelatinous material, a cross-linking agent, and water. This type of coating is similar to a base coating that is conventionally used on paper for photographic film. Examples of suitable gelatinous materials include GELITA® Imagel AF, GELITA® Imagel Type 8249, and GELITA® Imagel Type 8250, for example all as available from Kind & Know Gelatine, Inc., in Sioux City, Iowa. The gelatinous material preferably comprises 5-60% solids. Examples of suitable cross-linking agents include polyvinyl alcohol, and 2-(4-dimethylcarbomoyl-pyridino)-ethane-1-sulfonate, for example as available from H.W. Sands Corp. in Jupiter, Florida, under the trademark OB1207® . The resulting coating comprises 0.25-15% of the cross-linking agent and approximately 90-99.5% water.

The process of coating a substrate with the printable coating can be carried out either through extrusion, gravure or flexography, all of which are processes known to those skilled in the art of manufacturing labels. The extrusion process is used to apply a solid coating to the substrate, whereas gravure and flexography processes can be used to either apply a solid coating or spot coating. In the flexography method, for example, the coating is applied to an anilox roller and excess coating is scraped off of the anilox roller by a doctor blade and/or a nip roll. The coating is then passed from the anilox roller to a plate roll. The substrate passes between the coated plate roll and an impression roll, where the substrate is imprinted with the coating. The dwell time of the coating on the substrate varies depending on the thickness of the coating and the speed of the process. As the coating cures, the cross-linking agent is activated. The thickness of the coating depends on the viscosity of the coating and the percentage of solids in the coating. The thickness of the coating is preferably in a range of between about 0.5 pounds per ream and about 20 pounds per ream, wherein a ream is equal to approximately 3000 square feet.

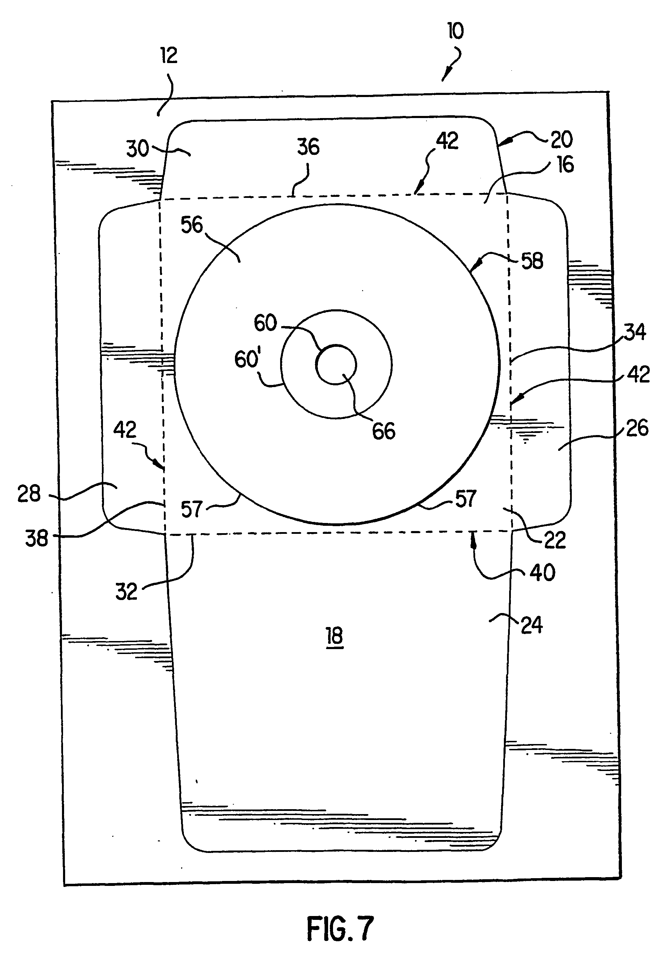

In another embodiment, shown in Fig. 7, the removable panel 56 can be used as a label for the compact disc 54 shown in Fig. 2. More particularly, the second side 18 of the primary panel 22 and/or the secondary panel 24 is die-cut, perforated, micro-perforated, or otherwise cut to form tearable line of separation 57, as shown in Fig. 7, which can be used to remove the removable panel 56 in any suitable shape, such as a circle 58, preferably slightly smaller than a diameter of a compact disc 54. Tearable line of separation 57 can also be formed as a gap between the removable panel 56 and the primary panel 22 and/or the secondary panel 24.

A second, smaller shape such as a circle 60 or 60', approximately equivalent to either a diameter of an inner cut-out circle 62 of the compact disc 54, or a diameter of an inner circle 64 on the compact disc 54 where a read/write portion of the compact disc 54 adjoins a non-read/write portion of the compact disc 54, such as shown in Fig. 2, can be located within the circle 58. The removable panel 56 defined by the two circles 58 and 60 can be drawn upon, typed upon, or otherwise printed upon, such as when the sheet 12 is run through a printer, and can then be separated from the protective panel 50 to which the removable panel 56 initially adheres. The removable panel 56 can then be adhered to a non-read/write side of the compact disc 54.

A plurality of nested circular removable panels 59, 61, 63 can be located within the circle 58, as shown in Fig. 12. The ring-shaped removable panels 59, 61, 63 formed between circles 60, 60', 60", 58 can be used for a wide variety of purposes. For example, the ring-shaped removable panel 63 formed between circles 60 and 60' can be adhered to the small non-read/write portion of a DVD as a label. Similarly, the ring-shaped removable panel 59 formed between circles 60" and 58 can be adhered to the non-read/write portion of a CD as a label. Meanwhile, the ring-shaped removable panel 61 formed between circles 60' and 60" can serve as a spacer between the ring-shaped removable panel 59 and the ring-shaped removable panel 63 and can be discarded when the removable panel 59 and the removable panel 63 are removed from the protective panel 50. Removable panels 59, 61, 63 are preferably but not necessarily ring-shaped; removable panels 59, 61, 63 can also have any polygonal shape or any other suitable non-circular shape.

The protective panel 50 of these embodiments is preferably at least partially transparent or translucent, constructed of, for example, glassine or clear plastic, such that the compact disc 54 donning the removable panel 56 can be viewed from outside the envelope 11 through the transparent or translucent portion of the protective panel 50. The middle portion 66 of the label either can be printed upon during the printing process of the remainder of the printable surface 16 and used as a separate label or sticker, or the middle portion 66 can remain on the protective panel 50 after the removable panel 56 has been removed, or the middle portion 66 can simply be discarded.

Another embodiment, similar to the one shown in Fig. 7, is shown in Fig. 8. In this embodiment, the removable panel 56 is used as a compact disc label. However, like the embodiment shown in Fig. 9, the flap 30 in this embodiment is attached to the secondary panel 24 opposite the primary panel 22, rather than to the primary panel 22. Furthermore, the flap 30 is also die-cut about a portion of a periphery of a tab 39. As in the embodiments shown in Figs. 7, 9 and 10, the removable panel 56 is bordered by the two circles 58 and 60 and can be printed upon when the sheet 12 is run through a printer, and can then be separated from the protective panel 50 to which the removable panel 56 initially adheres. The removable panel 56 can then be adhered to a non-read/write side of the compact disc 54. The protective panel 50 of this embodiment should also be at least partially transparent or translucent, constructed of, for example, glassine or clear plastic, such that the compact disc 54 donning the removable panel 56 can be viewed from outside the envelope 11 through the transparent or translucent protective panel 50.

In yet another embodiment, shown in Figs. 9 and 12, a removable panel 67, such as in the shape of a partial circle or another suitable shape, which may or may not correspond to a portion of removable panel 56, is located on or adjacent the second side 18 of one of the flaps 30, such that the removable panel 67 intersects or is positioned near a perimeter of the flap at two points 74 and 76. The removable panel 67 preferably has a radius of curvature roughly equal to a radius of curvature of the circle 58. The removable panel 67 can be removed from either the sheet 12, or both the sheet 12 and the protective panel 50. When the resulting envelope 11 is intended to be sealed, for example for mailing purposes, the embodiment in Fig. 9 is appropriate, such that the flap 30 can be folded onto or adjacent the primary panel 22, and the removable panel 67 can be removed, thereby leaving the entire view of the area under the removable panel 56 unobstructed. When the resulting envelope 11 is not intended to be sealed, but instead is intended to remain open, for example for filing or storage purposes, the embodiment in Fig. 12 is appropriate, such that the flap 30 on which the removable panel 67 is located is folded into a pocket space formed by the envelope 11 once the removable panel 67 is removed, thereby providing reinforcement along the folded edge 36 without blocking the view of the contents in the envelope 11 from outside the envelope 11.

In another preferred embodiment of the present invention, the envelope assembly 10 is preferably laminated, as shown in Figs. 11 and 13-15. The envelope assembly 10 preferably includes five layers in basic construction of a pressure sensitive label. The five layers include: (1) a face material 68; (2) a layer of a primer 70; (3) a layer of the adhesive coating 44; (4) a layer of the silicone coating 72; and (5) the protective panel 50. The face material 68 has a printable surface 16, as shown in Figs. 3, 11 and 13-15. The primer 70 is a layer or coating applied to the face material 68 that improves a bond between the adhesive coating 44 and the face material 68. The primer 70 also acts as a barrier to migration of chemicals that could stain the face material 68. The adhesive coating 44 allows the face material 68 to be affixed to a surface, such as securing one part of the face material 68 to another part of the face material 68 in assembling the envelope 11. The silicone coating 72 at least partially covers at least one side of the protective panel 50 and allows for easy "release" of the protective panel 50 from the adhesive coating 44. During manufacture, the adhesive coating 44 laminates the face material 68 to the silicone coated protective panel 50.

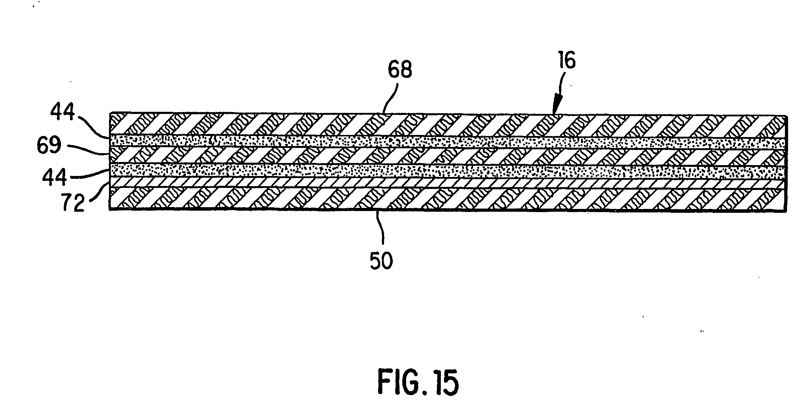

In an alternative embodiment of the present invention, shown in Fig. 15, the laminated envelope assembly 10 further comprises a laminate layer 69 between the face sheet 68 and the protective panel 50. The laminate layer 69 is positioned between two layers of the adhesive coating 44, with the face sheet 68 opposite one of the layers of the adhesive coating 44 and the protective panel 50 opposite the other layer of the adhesive coating 44. Additionally, a layer of the silicone coating 72 can be positioned between the protective panel 50 and one of the layers of the adhesive coating 44. Also, not shown in Fig. 15, layers of the primer 70 can be applied to the face material 68 and/or the laminate layer 69 in order to improve a bond between the adhesive coating 44 and the face material 68, and/or between the adhesive coating 44 and the laminate layer 69. The laminate layer 69 provides further protection from the threat of ink, for example from an ink jet printer, from bleeding into the adhesive coating 44 and further into a coating on a read/write portion of the compact disc 54 when the removable panel 56 is adhered to the compact disc 54, thereby protecting information stored on and extending the life of the compact disc 54. The laminate layer 69 can be constructed from any suitable polymer, including polyethylene, polyester, polypropylene, a liquid-applied extruded polymer, and/or any other suitable material.

In a preferred embodiment of the present invention, the protective panel 50 is of a size smaller than the sheet 12 and at least slightly larger than the removable panel 56. More particularly, in a preferred embodiment of the present invention geared toward housing the compact disc 54, the protective panel 50 is preferably about 5 inches by about 5 inches, or roughly the same size as the primary panel 22. The silicone coating 72 is applied in a layer to one side of the protective panel 50, such as in a manner known to those skilled in the art of labels. A layer of the adhesive coating 44 is then applied to and preferably covers the silicone coating 72. The protective panel 50 is then positioned over the second side 18 of the removable panel 56. When the removable panel 56 is separated from the envelope 11 or the envelope assembly 10, the adhesive coating 44 in contact with the removable panel 56 will release from the silicone coating 72 and will remain on the removable panel 56. The adhesive coating 44 in contact with an area surrounding the removable panel 56 on the second side 18 of the sheet 12 maintains the protective panel 50 in place with respect to the sheet 12 once the removable panel 56 has been removed.

The envelope assembly 10 of the present invention is suitable for a wide number of uses. Prior to folding and assembling, or even subsequent to folding and assembling, the envelope assembly 10 can be fed into and run through a printer for labeling and/or decorating any portion, including the tab 39 and the removable panel 56, or all of the resulting envelope 11. In its folded form, the envelope assembly 10 is a suitable size for holding compact discs 54. The envelope assembly 10 can be scaled up or down to house numerous other items, including stationery, photographs, and mini-discs. Additionally, holes 84 can be added to either the envelope assembly 10, as shown in Fig. 12, or to the finished envelope 11, as shown in Fig. 3. For example, the holes 84 enable a user to store the envelope 11 in a ring-binder, such as in a disc carrier or a personal planner. The holes 84 are preferably located in the primary panel 22 and/or the secondary panel 24, equidistant from the primary fold line 40, but may also be cut through any of the flaps 26, 28, 30, if necessary. The holes 84 can be circular or any other suitable shape. In one embodiment, circular holes 84 have a diameter in a range of between about 0.2 cm and 2 cm, preferably between about 0.3 cm and 1.5 cm, more preferably between about 0.4 cm and 1.2 cm. Additional reinforcement around the ring binder holes 84 can be provided with a support strip 86 or another suitable support backing, adhered to either the first side 14 or the second side 18, extending across part of the primary panel 22 and part of the secondary panel 24 and covering the area surrounding the holes 84, as shown in Fig. 12. Materials suitable for the support strip 86 include a MYLAR® material, a TYVEK® material, a TESLIN® material, a polypropylene material, a polyester material, a paper material, a synthetic paper material and a metal material.

While in the foregoing specification this invention has been described in relation to certain preferred embodiments thereof, and many details have been set forth for purpose of illustration, it will become apparent to those skilled in the art that the invention is susceptible to additional embodiments and that certain of the details described herein can be varied considerably without departing from the basic principles of the invention. Therefore, to particularly point out and distinctly claim the subject matter regarded as the invention, the following claims conclude the specification.

## Claims

1. A sheet of material comprising:
a first removable shape (20) defined on a first surface (18) of the sheet (12) of material;
an adhesive coating (44) at least partially covering a second surface (14) of the sheet (12) of material;
a protective panel (50) to which the adhesive coating (44) adheres significantly less than to the sheet (12) of material; and
at least one tearable registration line (78) extending from a first edge (35) of the sheet (12) of material to a second edge (31) of the first removable shape (20).

2. The sheet of material according to claim 1, wherein
the at least one tearable registration line (78) is substantially perpendicular to the first edge (35) of the sheet (12) of material.

3. The sheet of material according to claim 1 or 2, wherein
he second edge (31) of the first removable shape (20) is substantially parallel to the first edge (35) of the sheet (12) of material at an intersection of the second edge (31) of the first removable shape (20) and the at least one tearable registration line (78).

4. The sheet of material according to one of the claims 1 to 3, further comprising
a second removable shape defined on a surface of the protective panel (50) and at least partially aligned with the first removable shape (20).

5. The sheet of material according to claim 4, wherein
the at least one tearable registration line (78) extends from the edge (35) bf the sheet (12) of material, along the protective panel (50), to a third edge of the second removable shape (13).

6. The sheet of material according to one of the claims 1 to 5, wherein
the first removable shape (20) defines a primary panel (22), a secondary panel (24), and at least two flaps (26, 28, 30), and each of the flaps is adjacent the primary panel (22) on one of a plurality of primary panel edges (34, 36, 38) of the primary panel (22).

7. The sheet of material according to claim 6, wherein
the second edge of the first removable shape (20) is an edge of one of the flaps (26, 28, 30),

8. The sheet of material according to claim 6, wherein
the second edge (35) of the first removable shape (20) is an edge of the secondary panel (24).

9. The sheet of material according to one of the claims 6 to 8, wherein
the second edge of the first removable shape (20) is one of the primary panel edges (34, 36, 38) of the primary panel (22).

10. The sheet of material according to one of the claims 1 to 9, wherein
the sheet (12) of material comprises a printable surface (16).

11. The sheet of material according to one of the claims 1 to 10, further comprising
at least four tearable registration lines (78), wherein a first pair of the tearable registration lines extends from the first edge (31) of the sheet of material to a plurality of first separate edges of the first removable shape (20) and a second pair of the tearable registration lines (78) extends from a second edge (35) of the sheet (12) of material to a plurality of second separate edges of the first removable shape (20).

12. The sheet of material according to one of the claims 1 to 11, wherein
the sheet of material is continuous with a second sheet of material, the first edge of the sheet (12) of material is coextensive with a second edge of the second sheet of material, a repeating pattern of the first removable shape (20) is defined on a first surface (18) of the second sheet of material, and
at least one tearable registration line (78) extends between the first removable shape (20) on each of the sheets of material.

13. The sheet of material according to one of the claims 1 to 12, wherein
the at least one tearable registration line (78) is substantially parallel to longitudinal edges of the continuous sheets of material.

14. An envelope assembly comprising the sheet of material according to one
of the claims 1 to 13.

15. An envelope assembly according to claim 14 comprising:
a panel (22) having at least one ring-shaped removable panel (59, 61, 63); an adhesive coating (44) at least partially covering one side of the at least one ring-shaped removable panel (59, 61, 63).

16. The envelope assembly according to claim 15, further comprising
a plurality of nested ring-shaped removable panels (59, 61, 63).

17. The envelope assembly according to claim 15 or 16, wherein
the panel (22) comprises a printable surface (16).

18. The envelope assembly according to one of the claims 15 to 17, comprising
a first surface (18) of a primary panel (22) forming a secondary panel (24) adjacent an edge (32) of the primary panel (22), and a flap (30) adjacent the primary panel (22);
a removable circle (59) within the primary panel (22);
a removable partial circle (67) within the flap (30) ;
an adhesive coating (44) at least partially covering a second surface (14) of the primary panel (22); and
a protective panel (50) to which the adhesive coating (44) adheres significantly less than the primary panel (22) adheres to the adhesive coating (44).

19. The envelope assembly according to claim 18, wherein
a portion of a perimeter of the removable partial circle (67) is aligned with a portion of a perimeter of the removable circle (56, 59) when the flap is folded adjacent the primary panel (22).

20. The envelope assembly according to claim 18 or 19, wherein
the removable partial circle (67) has a first radius of curvature equal to a second radius of curvature of the removable circle (59).

21. The envelope assembly according to one of the claims 15 to 20, comprising:
a primary panel (22);
at least one removable panel (56) located on a surface of the primary panel (22), the at least one removable panel including a vinyl polymer; and
a protective panel (50) to which the at least one removable (56) panel is statically adhered.

22. The envelope assembly according to claim 21, wherein
the protective panel (50) substantially covers an interior surface of the primary panel (22).

23. The envelope assembly according to claim 21 or 22, further comprising
a second removable panel (56') within the outer periphery of the at least one removable panel (56).

24. The envelope assembly according to one of the claims 15 to 23, comprising
at least two flaps (26, 28, 30), wherein at least one of the flaps (26, 28, 30) extends outward from the primary panel (22) and is adhered to the secondary panel (24);
at least one removable panel (56, 56') located on the primary panel (22); and
the removable panel (56, 56') having a face sheet (12),
a first adhesive coating (44) at least partially covering a first surface (18) of the face sheet (12), the first adhesive coating (44) at least partially covering a first surface (18) of a sheet (12) of material,
a second adhesive coating (44) at least partially covering a second surface (14) of the sheet of material, and
a protective panel (50) adhering to the second adhesive coating (44) significantly less than the second surface (14) of the sheet of material adheres to the second adhesive coating (44).

25. The envelope assembly according to claim 24, further comprising
a layer of silicone positioned between the protective panel (50) and the second adhesive coating (44).

26. The envelope assembly according to claim 24 or 25, wherein
the protective panel (50) comprises at least one of a transparent material and a translucent material.

27. The envelope assembly according to one of the claims 24 to 26, wherein the sheet (12) of material is constructed of a polymeric material or of a liquid-applied extruded polymer.

## Patentansprüche

1. Materialblatt, das Folgendes umfasst:
eine erste entfernbare Form (20), die auf einer ersten Fläche (18) des Materialblatts (12) definiert ist;
eine Klebstoffbeschichtung (44), die eine zweite Fläche (14) des Materialblatts (12) zumindest teilweise bedeckt;
ein Schutzfeld (50), an dem die Klebstoffbeschichtung (44) wesentlich weniger haftet als an dem Materialblatt (12); und
mindestens eine durchreißbare Passlinie (78), die sich von einem ersten Rand (35) des Materialblatts (12) zu einem zweiten Rand (31) der ersten entfernbaren Form (20) erstreckt.

2. Materialblatt nach Anspruch 1, bei dem
die mindestens eine durchreißbare Passlinie (78) im Wesentlichen senkrecht zum ersten Rand (35) des Materialblatts (12) verläuft.

3. Materialblatt nach Anspruch 1 oder 2, bei dem
der zweite Rand (31) der ersten entfernbaren Form (20) an einer Schnittstelle des zweiten Rands (31) der ersten entfernbaren Form (20) und der mindestens einen durchreißbaren Passlinie (78) im Wesentlichen parallel zum ersten Rand (35) des Materialblatts (12) verläuft.

4. Materialblatt nach einem der Ansprüche 1 bis 3, weiterhin mit
einer zweiten entfernbaren Form, die auf einer Fläche des Schutzfelds (50) definiert und zumindest teilweise auf die erste entfernbare Form (20) ausgerichtet ist.

5. Materialblatt nach Anspruch 4, bei dem
die mindestens eine durchreißbare Passlinie (78) vom Rand (35) des Materialblatts (12) entlang des Schutzfeldes (50) zu einem dritten Rand der zweiten entfernbaren Form (13) verläuft.

6. Materialblatt nach einem der Ansprüche 1 bis 5, bei dem
die erste entfernbare Form (20) ein Primärfeld (22), ein Sekundärfeld (24) und mindestens zwei Klappen (26, 28, 30) definiert und sich jede der Klappen neben dem Primärfeld (22) an einem von mehreren Primärfeldrändern (34, 36, 38) des Primärfeldes (22) befindet.

7. Materialblatt nach Anspruch 6, bei dem
der zweite Rand der ersten entfernbaren Form (20) ein Rand einer der Klappen (26, 28, 30) ist.

8. Materialblatt nach Anspruch 6, bei dem
der zweite Rand (35) der ersten entfernbaren Form (20) ein Rand des Sekundärfeldes (24) ist.

9. Materialblatt nach einem der Ansprüche 6 bis 8, bei dem der zweite Rand der ersten entfernbaren Form (20) einer der Primärfeldränder (34, 36, 38) des Primärfeldes (22) ist.

10. Materialblatt nach einem der Ansprüche 1 bis 9, bei dem das Materialblatt (12) eine bedruckbare Fläche (16) umfasst.

11. Materialblatt nach einem der Ansprüche 1 bis 10, weiterhin mit
mindestens vier durchreißbaren Passlinien (78), wobei ein erstes Paar der durchreißbaren Passlinien von dem ersten Rand (31) des Materialblatts zu mehreren ersten getrennten Rändern der ersten entfernbaren Form (20) und ein zweites Paar der durchreißbaren Passlinien (78) von einem zweiten Rand (35) des Materialblatts (12) zu mehreren zweiten getrennten Rändern der ersten entfernbaren Form (20) verläuft.

12. Materialblatt nach einem der Ansprüche 1 bis 11, bei dem
das Materialblatt mit einem zweiten Materialblatt durchgehend ist, der erste Rand des Materialblatts (12) die gleiche Ausdehnung aufweist wie ein zweiter Rand des zweiten Materialblatts, auf einer ersten Fläche (18) des zweiten Materialblatts ein sich wiederholendes Muster der ersten entfernbaren Form (20) definiert ist und mindestens eine durchreißbare Passlinie (78) zwischen der ersten entfernbaren Form (20) auf jedem der Materialblätter verläuft.

13. Materialblatt nach einem der Ansprüche 1 bis 12, bei dem
die mindestens eine durchreißbare Passlinie (78) im Wesentlichen parallel zu Längsrändern der durchgehenden Materialblätter verläuft.

14. Briefumschlaganordung, die das Materialblatt nach einem der Ansprüche 1 bis 13 umfasst.

15. Briefumschlaganordnung nach Anspruch 14, die
ein Feld (22) mit mindestens einem ringförmigen entfernbaren Feld (59, 61, 63) umfasst; wobei eine Klebstoffbeschichtung (44) eine Seite des mindestens einen ringförmigen entfernbaren Feldes (59, 61, 63) zumindest teilweise bedeckt.

16. Briefumschlaganordnung nach Anspruch 15, weiterhin mit
mehreren ineinander geschachtelten ringförmigen entfernbaren Feldern (59, 61, 63).

17. Briefumschlaganordnung nach Anspruch 15 oder 16, bei der
das Feld (22) eine bedruckbare Fläche (16) umfasst.

18. Briefumschlaganordnung nach einem der Ansprüche 15 bis 17, mit
einer ersten Fläche (18) eines Primärfelds (22), die ein Sekundärfeld (24) neben einem Rand (32) des Primärfeldes (22) und eine Klappe (30) neben dem Primärfeld (22) bildet;
einem entfernbaren Kreis (59) im Primärfeld (22);
einem entfernbaren Teilkreis (67) in der Klappe (30);
einer Klebstoffbeschichtung (44), die eine zweite Fläche (14) des Primärfeldes (22) zumindest teilweise bedeckt; und
einem Schutzfeld (50), an dem die Klebstoffbeschichtung (44) wesentlich weniger haftet als das Primärfeld (22) an der Klebstoffbeschichtung (44) haftet.

19. Briefumschlaganordnung nach Anspruch 18, bei der
ein Teil eines Umfangs des entfernbaren Teilkreises (67) auf einen Teil eines Umfangs des entfernbaren Kreises (56, 59) ausgerichtet ist, wenn die Klappe neben dem Primärfeld (22) gefaltet ist.

20. Briefumschlaganordnung nach Anspruch 18 oder 19, bei der
der entfernbare Teilkreis (67) einen ersten Krümmungsradius aufweist, der gleich einem zweiten Krümmungsradius des entfernbaren Kreises (59) ist.

21. Briefumschlaganordnung nach einem der Ansprüche 15 bis 20, mit:
einem Primärfeld (22);
mindestens einem entfernbaren Feld (56), das sich auf einer Fläche des Primärfeldes (22) befindet, wobei das mindestens eine entfernbare Feld ein Vinylpolymer enthält, und
einem Schutzfeld (50), an dem das mindestens eine entfernbare Feld (56) statisch anhaftet.

22. Briefumschlaganordnung nach Anspruch 21, bei der das Schutzfeld (50) eine Innenfläche des Primärfeldes (22) im Wesentlichen bedeckt.

23. Briefumschlaganordnung nach Anspruch 21 oder 22, weiterhin mit einem zweiten entfernbaren Feld (56') innerhalb des Außenumfangs des ersten entfernbaren Feldes (56).

24. Briefumschlaganordnung nach einem der Ansprüche 15 bis 23, mit
mindestens zwei Klappen (26, 28, 30), wobei mindestens eine der Klappen (26, 28, 30) von dem Primärfeld (22) nach außen verläuft und an dem zweiten Feld (24) haftet;
mindestens einem entfernbaren Feld (56, 56'), das sich am Primärfeld (22) befindet; und
wobei das entfernbare Feld (56, 56') ein Deckblatt (12) aufweist,
einer ersten Klebstoffbeschichtung (44), die eine erste Fläche (18) des Deckblatts (12) zumindest teilweise bedeckt, wobei die erste Klebstoffbeschichtung (44) ein erste Fläche (18) eines Materialblatts (12) zumindest teilweise bedeckt,
einer zweiten Klebstoffbeschichtung (44), die eine zweite Fläche (14) des Materialblatts zumindest teilweise bedeckt, und
einem Schutzfeld (50), das wesentlich weniger an der zweiten Klebstoffbeschichtung (44) haftet als die zweite Fläche (14) des Materialblatts (12) an der zweiten Klebstoffbeschichtung (44) haftet.

25. Briefumschlaganordnung nach Anspruch 24, weiterhin mit
einer zwischen dem Schutzfeld (50) und der zweiten Klebstoffbeschichtung (44) angeordneten Silikonlage.

26. Briefumschlaganordnung nach Anspruch 24 oder 25, bei der
das Schutzfeld (50) ein durchsichtiges Material und/oder ein durchscheinendes Material umfasst.

27. Briefumschlaganordnung nach einem der Ansprüche 24 bis 26, bei der das Materialblatt (12) aus einem polymeren Material oder einem in flüssiger Form aufzubringenden extrudierten Polymer hergestellt ist.

## Revendications

1. Feuille de matériau comprenant :
une première forme amovible (20) définie sur une première surface (18) de la feuille (12) de matériau ;
un revêtement adhésif (44) recouvrant au moins en partie une deuxième surface (14) de la feuille (12) de matériau ;
un panneau protecteur (50) auquel le revêtement adhésif (44) adhère nettement moins qu'à la feuille (12) de matériau ; et
au moins une ligne d'alignement déchirable (78) s'étendant depuis un premier bord (35) de la feuille (12) de matériau jusqu'à un deuxième bord (31) de la première forme amovible (20).

2. Feuille de matériau selon la revendication 1, dans laquelle
ladite au moins une ligne d'alignement déchirable (78) est substantiellement perpendiculaire au premier bord (35) de la feuille (12) de matériau.

3. Feuille de matériau selon la revendication 1 ou 2, dans laquelle
le deuxième bord (31) de la première forme amovible (20) est substantiellement parallèle au premier bord (35) de la feuille (12) de matériau au niveau d'une intersection du deuxième bord (31) de la première forme amovible (20) et de ladite au moins une ligne d'alignement déchirable (78).

4. Feuille de matériau selon l'une quelconque des revendications 1 à 3, comprenant en outre
une deuxième forme amovible définie sur une surface du panneau protecteur (50) et au moins en partie alignée avec la première forme amovible (20) .

5. Feuille de matériau selon la revendication 4, dans laquelle
ladite au moins une ligne d'alignement déchirable (78) s'étend depuis le bord (35) de la feuille (12) de matériau, le long du panneau protecteur (50), jusqu'à un troisième bord de la deuxième forme amovible (13).

6. Feuille de matériau selon l'une quelconque des revendications 1 à 5, dans laquelle
la première forme amovible (20) définit un panneau primaire (22), un panneau secondaire (24), et au moins deux volets (26, 28, 30), et chacun des volets est adjacent au panneau primaire (22) sur l'un d'une pluralité de bords de panneau primaire (34, 36, 38) du panneau primaire (22).

7. Feuille de matériau selon la revendication 6, dans laquelle
le deuxième bord de la première forme amovible (20) est un bord de l'un des volets (26, 28, 30).

8. Feuille de matériau selon la revendication 6, dans laquelle
le deuxième bord (35) de la première forme amovible (20) est un bord du panneau secondaire (24) .

9. Feuille de matériau selon l'une quelconque des revendications 6 à 8, dans laquelle
le deuxième bord de la première forme amovible (20) est l'un des bords de panneau primaire (34, 36, 38) du panneau primaire (22).

10. Feuille de matériau selon l'une quelconque des revendications 1 à 9, dans laquelle
la feuille (12) de matériau comprend une surface imprimable (16).

11. Feuille de matériau selon l'une quelconque des revendications 1 à 10, comprenant en outre
au moins quatre lignes d'alignement déchirables (78), une première paire des lignes d'alignement déchirables s'étendant depuis le premier bord (31) de la feuille de matériau jusqu'à une pluralité de premiers bords séparés de la première forme amovible (20) et une deuxième paire des lignes d'alignement déchirables (78) s'étendant depuis un deuxième bord (35) de la feuille (12) de matériau jusqu'à une pluralité de deuxièmes bords séparés de la première forme amovible (20).

12. Feuille de matériau selon l'une quelconque des revendications 1 à 11, dans laquelle
la feuille de matériau est continue avec une deuxième feuille de matériau, le premier bord de la feuille (12) de matériau s'étendant en continu avec un deuxième bord de la deuxième feuille de matériau, un motif répétitif de la première forme amovible (20) étant défini sur une première surface (18) de la deuxième feuille de matériau et au moins une ligne d'alignement déchirable (78) s'étendant entre la première forme amovible (20) sur chacune des feuilles de matériau.

13. Feuille de matériau selon l'une quelconque des revendications 1 à 12, dans laquelle
ladite au moins une ligne d'alignement déchirable (78) est substantiellement parallèle aux bords longitudinaux des feuilles de matériau continues.

14. Ensemble d'enveloppe comprenant la feuille de matériau selon l'une quelconque des revendications 1 à 13.

15. Ensemble d'enveloppe selon la revendication 14, comprenant :
un panneau (22) ayant au moins un panneau amovible de forme annulaire (59, 61, 63) ;
un revêtement adhésif (44) recouvrant au moins en partie un côté dudit au moins un panneau amovible de forme annulaire (59, 61, 63).

16. Ensemble d'enveloppe selon la revendication 15, comprenant en outre
une pluralité de panneaux amovibles de forme annulaire imbriqués (59, 61, 63).

17. Ensemble d'enveloppe selon la revendication 15 ou 16, dans lequel
le panneau (22) comprend une surface imprimable (16) .

18. Ensemble d'enveloppe selon l'une quelconque des revendications 15 à 17, comprenant :
une première surface (18) d'un panneau primaire (22) formant un panneau secondaire (24) adjacent à un bord (32) du panneau primaire (22), et un volet (30) adjacent au panneau primaire (22) ;
un cercle amovible (59) à l'intérieur du panneau primaire (22) ;
un cercle partiel amovible (67) à l'intérieur du volet (30) ;
un revêtement adhésif (44) recouvrant au moins en partie une deuxième surface (14) du panneau primaire (22) ; et
un panneau protecteur (50) auquel le revêtement adhésif (44) adhère nettement moins que le panneau primaire (22) adhère au revêtement adhésif (44).

19. Ensemble d'enveloppe selon la revendication 18, dans lequel
une portion d'un périmètre du cercle partiel amovible (67) est alignée avec une portion d'un périmètre du cercle amovible (56, 59) lorsque le volet est plié en position adjacente au panneau primaire (22).

20. Ensemble d'enveloppe selon la revendication 18 ou 19, dans lequel
le cercle partiel amovible (67) a un premier rayon de courbure égal à un deuxième rayon de courbure du cercle amovible (59).

21. Ensemble d'enveloppe selon l'une quelconque des revendications 15 à 20, comprenant :
un panneau primaire (22) ;
au moins un panneau amovible (56) placé sur une surface du panneau primaire (22), ledit au moins un panneau amovible comportant un polymère vinylique, et un panneau protecteur (50) auquel ledit au moins un panneau amovible (56) est collé statiquement.

22. Ensemble d'enveloppe selon la revendication 21, dans lequel
le panneau protecteur (50) recouvre substantiellement une surface intérieure du panneau primaire (22).

23. Ensemble d'enveloppe selon la revendication 21 ou 22, comprenant en outre
un deuxième panneau amovible (56') dans la périphérie extérieure dudit au moins un panneau amovible (56).

24. Ensemble d'enveloppe selon l'une quelconque des revendications 15 à 23, comprenant :
au moins deux volets (26, 28, 30), au moins l'un des volets (26, 28, 30) s'étendant vers l'extérieur depuis le panneau primaire (22) et étant collé au panneau secondaire (24) ;
au moins un panneau amovible (56, 56') situé sur le panneau primaire (22) ;
et
le panneau amovible (56, 56') ayant une feuille de face (12),
un premier revêtement adhésif (44) recouvrant au moins en partie une première surface (18) de la feuille de face (12), le premier revêtement adhésif (44) recouvrant au moins en partie une première surface (18) d'une feuille (12) de matériau,
un deuxième revêtement adhésif (44) recouvrant au moins en partie une deuxième surface (14) de la feuille de matériau, et
un panneau protecteur (50) adhérant au deuxième revêtement adhésif (44) sensiblement moins que la deuxième surface (14) de la feuille de matériau adhère au deuxième revêtement adhésif (44).

25. Ensemble d'enveloppe selon la revendication 24, comprenant en outre
une couche de silicone positionnée entre le panneau protecteur (50) et le deuxième revêtement adhésif (44).

26. Ensemble d'enveloppe selon la revendication 24 ou 25, dans lequel
le panneau protecteur (50) comprend au moins l'un parmi un matériau transparent et un matériau translucide.

27. Ensemble d'enveloppe selon l'une quelconque des revendications 24 à 26, dans lequel
la feuille (12) de matériau est construite en matériau polymère ou en polymère extrudé appliqué sous forme liquide.
